# EUROPÄISCHE PATENTSCHRIFT

(11) **EP 3 475 142 B1**
(45) Veröffentlichungstag und Bekanntmachung des Hinweises auf die Patenterteilung: **02.12.2020**
(21) Anmeldenummer: 17728153.2
(22) Anmeldetag: 01.06.2017
(51) Int. Cl.: G01P 13/04, B61L 1/16

(54) **SENSOREINRICHTUNG UND VERFAHREN ZUM ERFASSEN EINER MAGNETFELDÄNDERUNG**
SENSOR DEVICE AND METHOD FOR SENSING A MAGNETIC FIELD CHANGE
DISPOSITIF DE DÉTECTION ET PROCÉDÉ DE DÉTECTION D'UNE VARIATION DE CHAMP MAGNÉTIQUE

(30) Priorität: 24.06.2016 DE 102016211354
(43) Veröffentlichungstag der Anmeldung: 01.05.2019
(73) Patentinhaber: Siemens Mobility GmbH, 81739 München (DE)
(72) Erfinder: FREISE, Rainer, 38124 Braunschweig (DE)
(86) Internationale Anmeldenummer: PCT/EP2017/063261
(87) Internationale Veröffentlichungsnummer: WO 2017/220306

(56) Entgegenhaltungen:
- WO-A1-2008/138858
- DE-A1- 19 709 840
- GOTTFRIED HOFFMANN ET AL: "Der elektronische AchszÃ hlpunkt ZP 43", SIGNAL & DRAHT,, Bd. 79, Nr. 4, 1. April 1987 (1987-04-01), Seiten 91-96, XP001390401,

## Beschreibung

Die Erfindung betrifft eine Sensoreinrichtung zum Erfassen einer Magnetfeldänderung, die durch ein sich der Sensoreinrichtung annäherndes oder an der Sensoreinrichtung vorbeibewegendes Objekt, insbesondere durch ein Rad eines Schienenfahrzeugs, verursacht ist, wobei die Sendereinrichtung wenigstens zwei wechselstromgespeiste Sender-Schwingkreise zum Ausbilden einer Senderfrequenz der Sendereinrichtung aufweist.

Ferner betrifft die Erfindung ein Verfahren zum Erfassen einer Magnetfeldänderung, die durch ein sich in einer Bewegungsrichtung einer Sensoreinrichtung annäherndes oder in der Bewegungsrichtung an die Sensoreinrichtung vorbeibewegendes Objekt verursacht wird, bei dem eine Senderfrequenz einer Sendereinrichtung von wenigstens zwei wechselstromgespeisten Sender-Schwingkreisen ausgebildet wird.

Sensoreinrichtungen und Verfahren der genannten Art werden beispielsweise in Radsensoren oder Achszählkontakten eingesetzt, um ein sich annäherndes oder vorbei bewegendes Objekt zu detektieren. In eisenbahntechnischen Anlagen ist dieses sich vorbei bewegende Objekt beispielsweise das stählerne Rad eines Schienenfahrzeugs. Das Objekt beeinflusst das von der Sensoreinrichtung erzeugte Magnetfeld, so dass die Magnetfeldänderung detektiert werden kann und für eine Erkennung des Objekts repräsentativ ist. Diese nach dem induktiven Wirkprinzip arbeitenden Sensoreinrichtungen sind beispielsweise in der Gleisfreimeldetechnik hinlänglich bekannt. Es gibt hier Ausführungen als ein- oder zweikanalige Sensoren oder jene mit getrenntem Sender und Empfänger, welche jeweils an der Schiene gegenüberliegend positioniert werden, und jene, die Sender und Empfänger in einem gemeinsamen Gehäuse auf der gleichen Schienenseite besitzen, beispielsweise auf der Schieneninnenseite zur Spurkranzdetektion.

Zweikanalige Sensoreinrichtungen werden üblicherweise für eine Richtungserkennung des vorbeifahrenden Schienenfahrzeugs verwendet. Beim Überfahren eines Rads des Schienenfahrzeugs erzeugen die beiden Sensorkanäle mit ihren Schwingkreisen nacheinander zeitlich versetzte Signale, die in einer Auswerteeinrichtung zur Fahrtrichtungserkennung genutzt werden. Bekannte Sensoreinrichtungen sind beispielsweise in der EP 0 340 660 A2, DE 10 2012 212 939 A1, DE 197 09 840 A1 oder DE 10 2014 207 409 A1 beschrieben.

Bei Sensoreinrichtungen der oben genannten Art mit zwei Sender-Schwingkreisen mit nur einer Frequenz sind die beiden Sender-Schwingkreise üblicherweise parallel geschaltet. Es muss hierbei sichergestellt sein, dass bei einem Defekt, beispielsweise einem Bauteilausfall in einem der Sender-Schwingkreise oder einem Aderbruch in der Zuleitung, kein unsicherer Zustand entsteht. Durch einen solchen Defekt kann sich nämlich die Empfangsspannung des nicht betroffenen Kanals verändern, was möglicherweise eine Unempfindlichkeit gegenüber vorbeifahrenden Objekten erhöht und somit sicherheitstechnisch problematisch wäre. Um dies zu verhindern, wird beispielsweise die Empfangsspannung überwacht, um so den Fehlerfall detektieren zu können. Allerdings ist dies aufwendig und erhöht die Herstellungskosten.

Es ist die Aufgabe der vorliegenden Erfindung eine Sensoreinrichtung und ein Verfahren der eingangs genannten Art bereitzustellen, bei denen eine Ausfalloffenbarung auf einfache Weise realisiert ist.

Die Aufgabe wird durch die erfindungsgemäße Sensoreinrichtung nach Anspruch 1 und durch das erfindungsgemäße Verfahren nach Anspruch 7 gelöst.

Die erfindungsgemäße Lösung hat den Vorteil, dass sich bei einem Defekt oder Ausfall eines Sender-Schwingkreises, beispielsweise durch einen Bauteilausfall oder einen Aderbruch, die Senderfrequenz der Sendereinrichtung verändert. Diese Veränderung der Senderfrequenz ist auf einfache Weise detektierbar, so dass anschließend dementsprechend sicherheitstechnisch reagiert werden kann.

Ein weiterer Vorteil der erfindungsgemäßen Lösung ist, dass diese konstruktiv besonders einfach umsetzbar ist, nämlich durch eine entsprechende Ausbildung der Sender-Schwingkreise, was sie besonders wirtschaftlich macht. Auch können vorhandene Sendereinrichtungen mit Hilfe der Erfindung besonders einfach umgerüstet werden. Es müssen nur die Sender-Schwingkreise ausgetauscht werden. In den Sender-Schwingkreisen werden vorteilhafterweise keine zusätzlichen Bauelemente benötigt, die Kosten verursachen würden und ggf. die Verfügbarkeit reduzieren könnten. Ferner ist die erfindungsgemäße Lösung allein auf Seiten der Sendereinrichtung realisierbar und dadurch beispielsweise unabhängig von einem Empfangssignalpegel, der bei einkanaligem Senderausfall in Abhängigkeit von der Anbauposition an der Schiene und dem Schienentyp variieren kann.

Die erfindungsgemäße Lösung kann durch vorteilhafte Ausführungsformen weiterentwickelt werden, die im Folgenden beschrieben sind.

So können die wenigstens zwei Sender-Schwingkreise derart ausgebildet sein, dass ihre Resonanzfrequenzen jeweils außerhalb eines vorgegebenen Bereichs der Senderfrequenz ausgebildet sind. Dies hat den Vorteil, dass ein Fehler beispielsweise durch einen Aderbruch besonders einfach festgestellt werden kann, weil beispielsweise der vorgegebene Bereich der Senderfrequenz bei vorhandenen Einrichtungen bereits überwacht wird. Dadurch sind die nötigen Änderungen zur Realisierung der Erfindung besonders gering.

Um die Sendereinrichtung besonders einfach auszubilden, kann die Sendereinrichtung wenigstens eine Oszillatorschaltung aufweisen, die die wenigstens zwei Sender-Schwingkreise als frequenzbestimmende Glieder umfasst und in der die Sender-Schwingkreise parallel zueinander geschaltet sind.

In einer vorteilhaften Ausgestaltung können die wenigstens zwei Senderschwingkreise zueinander unterschiedliche Kapazitäten und/oder Induktivitäten aufweisen. Dies hat den Vorteil, dass die Erfindung so besonders einfach umgesetzt werden kann. Es ist selbstverständlich bei der Auswahl der Induktivitäten und Kapazitäten zu beachten, dass die sich dadurch ergebenden Resonanzfrequenzen unterschiedlich sind.

Zur erfindungsgemäßen Lösung könnte ein Sender-Schwingkreis eine niedrigere Resonanzfrequenz als die gewünschte Senderfrequenz aufweisen und der andere Sender-Schwingkreis eine entsprechend höhere Resonanzfrequenz als die gewünschte Senderfrequenz aufweisen. Durch die Parallelschaltung der Senderschwingkreise ergibt sich als Mittelwert der beiden Resonanzfrequenzen die Senderfrequenz der Oszillatorschaltung.

Die Erfindung betrifft die erfindungsgemäße Sensoreinrichtung zum Erfassen einer Magnetfeldänderung, die durch ein sich der Sensoreinrichtung annäherndes oder an der Sensoreinrichtung vorbei bewegendes Objekt, insbesondere durch ein Rad eines Schienenfahrzeugs, verursacht ist, wobei die Sensoreinrichtung wenigstens eine Sendereinrichtung und wenigstens eine Empfängereinrichtung aufweist. Erfindungsgemäß ist die Sendereinrichtung nach einer der oben beschriebenen Ausführungsformen ausgebildet.

Die erfindungsgemäße Sensoreinrichtung weist die Sensoreinrichtung wenigstens eine Überwachungseinrichtung auf, welche zum Ermitteln der Senderfrequenz der Sendereinrichtung und zum Prüfen, ob die ermittelte Senderfrequenz in einem vorgegebenen Frequenzbereich liegt, ausgebildet ist. Dies hat den Vorteil, dass die Überwachungseinrichtung auf einfache Weise einen Defekt und die damit verbundene Frequenzänderung der Senderfrequenz ermittelt. Eine solche Überwachungseinrichtung kann Teil der Sendereinrichtung sein. Alternativ kann die Überwachungseinrichtung aber auch Teil der Empfängereinrichtung sein und empfängerseitig die Senderfrequenz ermitteln und überwachen.

Um weitere sicherheitstechnisch nötige Maßnahmen ggf. automatisch auszulösen, kann die Überwachungseinrichtung zur Ausgabe eines Warnsignals ausgebildet sein, wenn die ermittelte Senderfrequenz außerhalb des vorgegebenen Frequenzbereichs liegt.

Um die Erfindung besonders vorteilhaft für eisenbahntechnische Anlage nutzen zu können, kann die Sensoreinrichtung als ein Radsensor zur Erfassung einer Magnetfeldänderung ausgebildet sein, die durch ein sich auf einer Schiene in einer Bewegungsrichtung entlang der Schienenlängsrichtung an dem Radsensor vorbei bewegendes Rad verursacht ist.

In einer vorteilhaften Ausgestaltung des erfindungsgemäßen Verfahrens können die wenigstens zwei Resonanzfrequenzen jeweils mit einer Frequenz außerhalb eines vorgegebenen Frequenzbereichs der Senderfrequenz ausgebildet werden. Dies hat den oben bereits beschriebenen Vorteil, dass die Überwachung des vorgegebenen Frequenzbereichs häufig bereits vorhanden und dadurch einfach realisiert werden kann.

Um weitere sicherheitstechnisch nötige Maßnahmen bei einem Defekt einzuleiten, kann die Senderfrequenz ermittelt werden und ein Warnsignal erzeugt werden, wenn die ermittelte Senderfrequenz außerhalb des vorgegebenen Bereichs liegt.

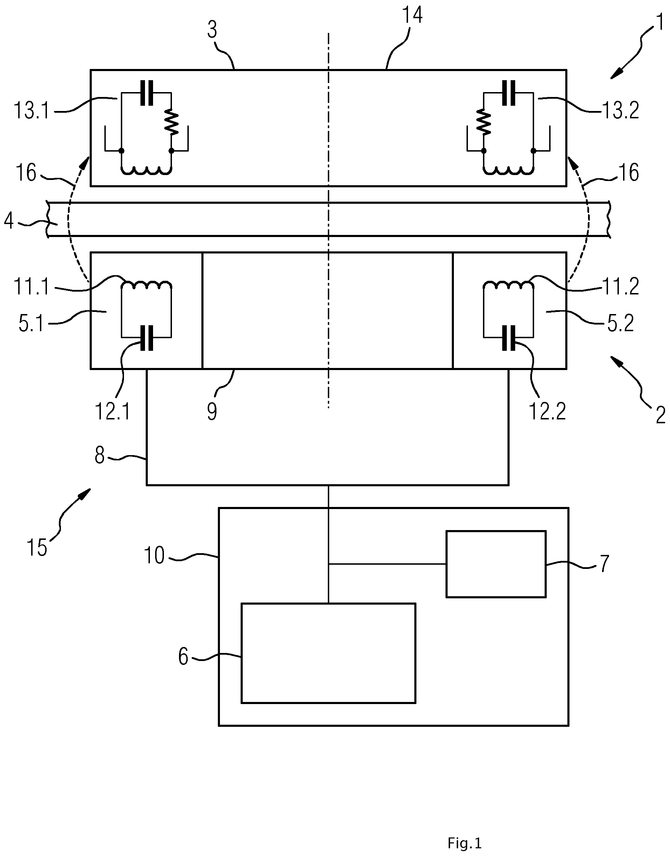

In Folgenden wird die Erfindung mit Bezug auf die beigefügte Zeichnung erläutert.

Die einzige Figur zeigt eine schematische Darstellung einer beispielhaften Ausführungsform einer erfindungsgemäßen Sensoreinrichtung.

Eine Sensoreinrichtung 1 der in der Figur beispielhaft dargestellten Ausführungsform umfasst eine Sendereinrichtung 2 und eine Empfängereinrichtung 3. Die Sensoreinrichtung 1 ist auf beiden Seiten einer Schiene 4 angeordnet, die Teil einer nicht weiter dargestellten eisenbahntechnischen Anlage ist und von wenigstens einem nicht dargestellten Schienenfahrzeug in einer Bewegungsrichtung entlang der Schienenlängsrichtung befahren wird.

Die Sendereinrichtung 2 weist zwei parallelgeschaltete Sender-Schwingkreise 5.1, 5.2, eine elektronische Schaltung 6 und eine Überwachungseinrichtung 7 auf. Diese Komponenten der Sensoreinrichtung 2 sind über elektrische Verbindungen 8, die in der Figur der Übersichtlichkeit halber lediglich vereinfacht dargestellt sind, miteinander elektrisch verbunden. Bei der in der Figur beispielhaft dargestellten Sensoreinrichtung 1 sind die beiden Sender-Schwingkreise 5.1, 5.2 in einem Gehäuse 9 und die elektronische Schaltung 6 und die Überwachungseinrichtung 7 in einem weiteren Gehäuse 10 angeordnet. Selbstverständlich könnte die Sendereinrichtung 2 auch komplett in einem gemeinsamen Gehäuse angeordnet sein. Die Sender-Schwingkreise 5.1, 5.2 weisen jeweils eine Induktivität 11.1, 11.2, beispielsweise eine Spule, und jeweils eine Kapazität 12.1, 12.2, beispielsweise einen Kondensator, auf. Die Sender-Schwingkreise 5.1, 5.2 sind als Parallelschwingkreise ausgebildet.

Die Empfängereinrichtung 3 weist zwei Empfänger-Schwingkreise 13.1, 13.2 und eine nicht dargestellte Auswerteeinrichtung auf. Die Empfänger-Schwingkreise 13.1, 13.2 sind in einem Gehäuse 14 gegenüberliegend von den Sender-Schwingkreisen 5.1, 5.2 auf der anderen Seite der Schiene 4 angeordnet. Die Empfängereinrichtung 3 könnte alternativ beispielsweise auch nur einen Empfänger-Schwingkreis 13 aufweisen.

Im Folgenden wird die Funktionsweise der erfindungsgemäßen Sensoreinrichtung 1 beschrieben.

Im Betrieb erzeugt die elektronische Schaltung 6 der Sendereinrichtung 2 einen Wechselstrom mit einer Senderfrequenz fₛ von beispielsweise 50 kHz. Dieser Wechselstrom speist über die elektrischen Verbindungen 8 die beiden parallelgeschalteten Sender-Schwingkreise 5.1, 5.2. Erfindungsgemäß sind die beiden Sender-Schwingkreise 5.1, 5.2 so ausgestaltet, dass sie zueinander unterschiedliche Resonanzfrequenzen fᵣ aufweisen. Die Resonanzfrequenzen fᵣ sind so ausgebildet, dass sie jeweils außerhalb eines vorgegebenen Bereichs von 50 kHz +/-3 kHz liegen. Bei der beispielhaften Ausführungsform in der Figur weist beispielsweise der Sender-Schwingkreis 5.1 eine Resonanzfrequenz von 45 kHz und der Sender-Schwingkreis 5.2 eine Resonanzfrequenz von 55 kHz auf. Die beiden Sender-Schwingkreise 5.1, 5.2 und die elektronische Schaltung 6 bilden gemeinsam eine selbstschwingende Oszillatorschaltung 15 aus. Die Senderfrequenz fₛ stellt sich ein durch die Parallelschaltung der Sender-Schwingkreise 5.1, 5.2 als Mittelwert der zueinander verschiedenen Resonanzfrequenzen fᵣ der beiden Sender-Schwingkreise 5.1, 5.2. In der in der Figur dargestellten beispielhaften Ausführungsform ist die Senderfrequenz fₛ somit 50 kHz. Die Senderfrequenz fₛ ist eine Arbeitsfrequenz der Sendereinrichtung 2. Die Überwachungseinrichtung 7 ermittelt im Betrieb die Senderfrequenz fₛ der Sendereinrichtung 2 und prüft, ob die ermittelte Senderfrequenz fₛ in dem vorgegebenen Frequenzbereich von hier 50 kHz +/- 3 kHz liegt. Wenn die ermittelte Senderfrequenz fₛ außerhalb des vorgegebenen Frequenzbereichs liegt, gibt die Überwachungseinrichtung 7 ein Warnsignal aus.

Wenn bei der erfindungsgemäßen Sendereinrichtung 2 einer der Sender-Schwingkreise 5.1, 5.2 infolge eines Fehlers, wie beispielsweise eines Kabel- oder Aderbruchs oder eines Bauteilausfalls, ausfallen, ändert sich die Senderfrequenz fₛ der Oszillatorschaltung 15 zwangsläufig, weil sie nur noch durch den einen verbleibenden Sender-Schwingkreis 5.1, 5.2 bestimmt wird. Der eine Sender-Schwingkreis 5.1, 5.2 zieht die Senderfrequenz fₛ außerhalb des vorgegebenen Bereichs, da die Senderfrequenz fₛ jetzt der Resonanzfrequenz fᵣ des verbleibenden Sender-Schwingkreises 5.1, 5.2 entspricht. Diese Veränderung der Senderfrequenz fₛ außerhalb des vorgegebenen Bereichs wird durch die Überwachungseinrichtung 7 erkannt und das entsprechende Warnsignal zeigt den Fehler der Sendereinrichtung 2 an. Das Warnsignal kann beispielsweise an eine nicht dargestellte Leitstelle der eisenbahntechnischen Anlage übermittelt werden, die entsprechende Maßnahmen veranlasst.

Durch den von der Oszillatorschaltung 15 der Sendereinrichtung 2 erzeugten Wechselstrom wird ein Magnetfeld erzeugt, das in den Empfänger-Schwingkreisen 13.1, 13.2 der Empfängereinrichtung 3 durch die magnetische Kopplung 16 einen Strom induziert. Ein entlang der Schiene 4 vorbeifahrendes Objekt, beispielsweise das Rad eines Schienenfahrzeugs, beeinflusst diese magnetische Kopplung 16, so dass die Magnetfeldänderung empfängerseitig von der nicht dargestellten Auswerteeinrichtung der Empfängereinrichtung 3 detektiert werden kann.

Die Sendereinrichtung 2 und die Empfängereinrichtung 3 sind in der beispielhaften Ausführungsform der Figur jeweils mit zwei Sender-Schwingkreisen 5.1, 5.2 und zwei Empfänger-Schwingkreisen 13.1, 13.2 ausgebildet. Daher wird die Sensoreinrichtung 1 auch als zweikanalig bezeichnet, wobei jeder Sender-Schwingkreis 5.1, 5.2 bzw. Empfänger-Schwingkreis 13.1, 13.2 jeweils einen Kanal ausbildet. Die erfindungsgemäße Sendereinrichtung 2 in der Figur weist zwei Kanäle auf, könnte aber selbstverständlich auch mehr Kanäle aufweisen.

## Patentansprüche

1. Sensoreinrichtung (1) zum Erfassen einer Magnetfeldänderung, die durch ein sich der Sensoreinrichtung (1) annäherndes oder an der Sensoreinrichtung (1) vorbeibewegendes Objekt, insbesondere durch ein Rad eines Schienenfahrzeugs, verursacht ist, wobei die Sensoreinrichtung (1) wenigstens eine Sendereinrichtung (2) und wenigstens eine Empfängereinrichtung (3) aufweist,
wobei die Sendereinrichtung (2) wenigstens zwei wechselstromgespeiste Sender-Schwingkreise (5.1, 5.2) zum Ausbilden einer Senderfrequenz (fₛ) der Sendereinrichtung (2) aufweist,
wobei die wenigstens zwei Sender-Schwingkreise (5.1, 5.2) derart ausgebildet sind, dass ihre Resonanzfrequenzen (fᵣ) zueinander unterschiedlich sind und
die Sensoreinrichtung (1) wenigstens eine Überwachungseinrichtung (7) aufweist, welche zum Ermitteln der Senderfrequenz (fₛ) der Sendereinrichtung (2) und zum Prüfen, ob die ermittelte Senderfrequenz (fₛ) in einem vorgegebenen Frequenzbereich liegt, ausgebildet ist.

2. Sensoreinrichtung (1) nach Anspruch 1,
wobei die wenigstens zwei Sender-Schwingkreise (5.1, 5.2) derart ausgebildet sind, dass ihre Resonanzfrequenzen (fᵣ) jeweils außerhalb eines vorgegebenen Bereichs der Senderfrequenz (fₛ) ausgebildet sind.

3. Sensoreinrichtung (1) nach Anspruch 1 oder 2,
wobei die Sendereinrichtung (2) wenigstens eine Oszillatorschaltung (15) aufweist, die die wenigstens zwei Sender-Schwingkreise (5.1, 5.2) umfasst und in der die Sender-Schwingkreise (5.1, 5.2) parallel zueinander geschaltet sind.

4. Sensoreinrichtung (1) nach einem der oben genannten Ansprüche,
wobei die wenigstens zwei Sender-Schwingkreise (5.1, 5.2) zueinander unterschiedliche Kapazitäten (12.1, 12.2) und/oder Induktivitäten (11.1, 11.2) aufweisen.

5. Sensoreinrichtung (1) nach einem der oben genannten Ansprüche,
wobei die Überwachungseinrichtung (7) zur Ausgabe eines Warnsignals ausgebildet ist, wenn die ermittelte Senderfrequenz (fₛ) außerhalb des vorgegebenen Frequenzbereichs liegt.

6. Sensoreinrichtung (1) nach einem der oben genannten Ansprüche,
wobei die Sensoreinrichtung (1) als ein Radsensor zum Erfassen einer Magnetfeldänderung ausgebildet ist, die durch ein sich auf einer Schiene in einer Bewegungsrichtung entlang der Schienenlängsrichtung an dem Radsensor vorbei bewegenden Rad verursacht ist.

7. Verfahren zum Erfassen einer Magnetfeldänderung, die durch ein sich in einer Bewegungsrichtung einer Sensoreinrichtung
(1) annäherndes oder in der Bewegungsrichtung an die Sensoreinrichtung (1) vorbeibewegendes Objekt verursacht wird, bei dem eine Senderfrequenz (fₛ) von einer Sendereinrichtung
(2) mit wenigstens zwei wechselstromgespeisten Sender-Schwingkreisen (5.1, 5.2) ausgebildet wird,
wobei die Senderfrequenz (fₛ) aus wenigstens zwei zueinander unterschiedlichen Resonanzfrequenzen (fᵣ) der wenigstens zwei Sender-Schwingkreise (5.1, 5.2) ausgebildet wird und die Senderfrequenz (fₛ) ermittelt wird und geprüft wird, ob die ermittelte Senderfrequenz (fₛ) in einem vorgegebenen Frequenzbereich liegt.

8. Verfahren nach Anspruch 7,
wobei die wenigstens zwei Resonanzfrequenzen (fᵣ) jeweils mit einer Frequenz außerhalb eines vorgegebenen Frequenzbereichs der Senderfrequenz (fₛ) ausgebildet werden.

9. Verfahren nach Anspruch 8,
wobei die Senderfrequenz (fₛ) ermittelt wird und ein Warnsignal erzeugt wird, wenn die ermittelte Senderfrequenz (fₛ) außerhalb des vorgegebenen Bereichs liegt.

## Claims

1. Sensor device (1) for detecting a magnetic field change caused by an object approaching or moving past the sensor device (1), in particular by a wheel of a rail vehicle,
wherein the sensor device (1) has at least one transmitter device (2) and at least one receiver device (3),
wherein the transmitter device (2) has at least two alternating-current-fed transmitter oscillating circuits (5.1, 5.2) for the formation of a transmitter frequency (fₛ) of the transmitter device (2),
wherein the at least two transmitter oscillating circuits (5.1, 5.2) are designed such that their resonance frequencies (fᵣ) are different from one another and
the sensor device (1) has at least one monitoring device (7) which is designed for determining the transmitter frequency (fₛ) of the transmitter device (2) and for checking whether the determined transmitter frequency (fₛ) is in a predetermined frequency range.

2. Sensor device (1) according to claim 1,
wherein
the at least two transmitter oscillating circuits (5.1, 5.2) are designed such that their resonance frequencies (fᵣ) are each formed outside a predetermined range of the transmitter frequency (fₛ).

3. Sensor device (1) according to claim 1 or 2,
wherein
the transmitter device (2) has at least one oscillator circuit (15) which includes the at least two transmitter oscillating circuits (5.1, 5.2) and in which the transmitter oscillating circuits (5.1, 5.2) are connected to one another in parallel.

4. Sensor device (1) according to one of the preceding claims,
wherein
the at least two transmitter oscillating circuits (5.1, 5.2) have mutually different capacitances (12.1, 12.2) and/or inductances (11.1, 11.2).

5. Sensor device (1) according to one of the preceding claims,
wherein
the monitoring device (7) is designed for outputting a warning signal when the determined transmitter frequency (fₛ) is outside the predetermined frequency range.

6. Sensor device (1) according to one of the preceding claims,
wherein
the sensor device (1) is designed as a wheel sensor for detecting a magnetic field change which is caused by a wheel moving past the wheel sensor on a rail in a direction of movement along the longitudinal direction of the rail.

7. Method for detecting a magnetic field change which is caused by an object approaching or moving past a sensor device (1) in the direction of movement of a sensor device (1), in which a transmitter frequency (fₛ) is formed by a transmitter device (2) having at least two alternating-current-fed transmitter oscillating circuits (5.1, 5.2),
wherein
the transmitter frequency (fₛ) is formed from at least two different resonance frequencies (fᵣ) of the at least two transmitter oscillating circuits (5.1, 5.2) and the transmitter frequency (fₛ) is determined and checked to see whether the determined transmitter frequency (fₛ) is in a predetermined frequency range.

8. Method according to claim 7,
wherein
the at least two resonance frequencies (fᵣ) are each formed with a frequency outside a predetermined frequency range of the transmitter frequency (fₛ).

9. Method according to claim 8,
wherein
the transmitter frequency (fₛ) is determined and a warning signal is generated when the determined transmitter frequency (fₛ) is outside the predetermined range.

## Revendications

1. Dispositif (1) à capteur pour détecter une variation de champ magnétique, provoquée par un objet, notamment par une roue d'un véhicule ferroviaire se rapprochant du dispositif (1) à capteur ou passant devant le dispositif (1) à capteur, le dispositif (1) à capteur ayant au moins un dispositif (2) d'émission et au moins un dispositif (3) de réception,
dans lequel le dispositif (2) d'émission a au moins deux circuits (5.1, 5.2) oscillants d'émetteur, alimentés en courant alternatif pour la formation d'une fréquence (fₛ) d'émission du dispositif (2) d'émission,
dans lequel
les au moins deux circuits (5.1, 5.2) oscillants d'émetteur sont constitués de manière à ce que leurs fréquences (fᵣ) de résonnance soient différentes l'une de l'autre et
le dispositif (1) à capteur a au moins un dispositif (7) de contrôle, constitué pour déterminer la fréquence (fₛ) d'émission du dispositif (2) d'émission et pour contrôler si la fréquence (fₛ) d'émission déterminée se trouve dans une plage de fréquence donnée à l'avance.

2. Dispositif (1) à capteur suivant la revendication 1,
dans lequel
les au moins deux circuits (5.1, 5.2) oscillants d'émetteur sont constitué de manière à ce que leurs fréquences (fᵣ) de résonnance soient chacune à l'extérieur d'une plage donnée à l'avance de la fréquence (fₛ) d'émission.

3. Dispositif (1) à capteur suivant la revendication 1 ou 2,
dans lequel
le dispositif (2) d'émission a au moins un circuit (15) oscillant, qui comprend les au moins deux circuits (5.1, 5.2) oscillants d'émetteur et dans lequel les circuits (5.1, 5.2) oscillants d'émetteur sont montés en parallèle l'un avec l'autre.

4. Dispositif (1) à capteur suivant l'une des revendications précédentes,
dans lequel
les au moins deux circuits (5.1, 5.2) oscillants d'émetteur ont des capacités (12.1, 12.2) et/ou des inductions (11.1, 11.2) différentes l'une de l'autre.

5. Dispositif (1) à capteur suivant l'une des revendications précédentes,
dans lequel
le dispositif (7) de contrôle est constitué pour émettre un signal d'alerte, si la fréquence (fₛ) d'émission, qui est déterminée, est en dehors de la plage de fréquence donnée à l'avance.

6. Dispositif (1) à capteur suivant l'une des revendications précédentes,
dans lequel
le dispositif (1) à capteur est constitué sous la forme d'un capteur de roue pour la détection d'une variation de champ magnétique, qui est provoquée par une roue passant devant le capteur de roue sur un rail dans une direction de déplacement suivant la direction longitudinale du rail.

7. Procédé de détection d'une variation de champ magnétique, provoquée par un objet se rapprochant, dans une direction de déplacement, d'un dispositif (1) à capteur ou passant dans la direction de déplacement devant le dispositif (1) à capteur, dans lequel on forme une fréquence (fₛ) d'émission par un dispositif (2) d'émission ayant au moins deux circuits (5.1, 5.2) oscillants d'émetteur alimentés en courant alternatif,
dans lequel
on forme la fréquence (fₛ) d'émission à partir d'au moins deux fréquences (fᵣ) de résonnance différentes l'une de l'autre des au moins deux circuits (5.1, 5.2) oscillants d'émetteur et on détermine la fréquence (fₛ) d'émission et on contrôle si la fréquence (fₛ) d'émission, qui est déterminée, est dans une plage de fréquence donnée à l'avance.

8. Procédé suivant la revendication 7,
dans lequel
les au moins deux fréquences (fᵣ) de résonnance sont formées chacune par une fréquence à l'extérieur d'une plage de fréquence donnée à l'avance de la fréquence (fₛ) d'émission.

9. Procédé suivant la revendication 8,
dans lequel
on détermine la fréquence (fₛ) d'émission et on produit un signal d'alerte, si la fréquence (fₛ) d'émission, qui est déterminée, est à l'extérieur de la plage donnée à l'avance.
